# EUROPÄISCHE PATENTSCHRIFT

(11) **EP 2 150 686 B1**
(45) Veröffentlichungstag und Bekanntmachung des Hinweises auf die Patenterteilung: **05.11.2014**
(21) Anmeldenummer: 08759791.0
(22) Anmeldetag: 20.05.2008
(51) Int. Cl.: F01N 3/027, F01N 3/08, F01N 3/20, F01N 9/00, F01N 11/00

(54) **VERFAHREN ZUM BETRIEB EINES KRAFTFAHRZEUGS MIT EINER ABGAS-HEIZVORRICHTUNG**
METHOD AND DEVICE FOR OPERATING A MOTOR VEHICLE COMPRISING AN EXHAUST GAS HEATING DEVICE
PROCÉDÉ DE FONCTIONNEMENT D'UN VÉHICULE À MOTEUR ÉQUIPÉ D'UN DISPOSITIF DE CHAUFFE DES GAZ D'ÉCHAPPEMENT

(30) Priorität: 31.05.2007 DE 102007025419
(43) Veröffentlichungstag der Anmeldung: 10.02.2010
(73) Patentinhaber: Emitec Gesellschaft für Emissionstechnologie mbH, 53797 Lohmar (DE)
(72) Erfinder: KONIECZNY, Jörg-Roman, 53804 Much (DE); BRÜCK, Rolf, 51429 Bergisch Gladbach (DE); HODGSON, Jan, 53840 Troisdorf (DE)
(74) Vertreter: Rössler, Matthias
(86) Internationale Anmeldenummer: PCT/EP2008/056179
(87) Internationale Veröffentlichungsnummer: WO 2008/145566

(56) Entgegenhaltungen:
- EP-A- 1 898 061
- DE-A1- 4 241 494
- DE-A1- 10 127 782
- DE-C2- 4 042 562
- US-A- 5 323 607

## Beschreibung

Die vorliegende Erfindung betrifft ein Verfahren zum Betrieb eines Kraftfahrzeuges, das einen Antrieb und eine Abgasanlage mit wenigstens einer regelbaren und mit Abgas in Kontakt bringbaren Heizvorrichtung aufweist.

Es ist als bekannt anzusehen, das von einem Motor eines Kraftfahrzeuges erzeugte Abgase mit einer Heizvorrichtung in Kontakt zu bringen, um die Temperatur des Abgases zu beeinflussen. Darüber hinaus ist auch als bekannt anzusehen, dass solche Heizeinrichtungen beispielsweise gerade nach einem Kalt- oder Neustart eines Motors bzw. einer Abgasanlage dazu verwendet werden, die Abgase bzw. die Abgasreinigungskomponenten, die mit einer katalytisch aktiven Beschichtung versehen sind, schnell auf die Reaktionstemperatur zu bringen, insbesondere auf eine Temperatur, bei der eine Interaktion des Katalysators mit den Schadstoffen des Abgases stattfindet.

Als Heizeinrichtungen sind insbesondere solche bereits vorgeschlagen worden, die in Folge einer Ohmschen Widerstandserwärmung erhitzt werden. Der zu gewünschten Zeitpunkten mit Strom durchflossene elektrische Leiter erhitzt sich aufgrund seines Widerstandes und kann somit das darauf positionierte katalytisch aktive Material und/oder das Abgas erwärmen. Die Ausgestaltungen solcher Heizeinrichtungen sind mannigfaltig, insbesondere sind Draht-Gitter-Konstruktionen, Wabenkörper, Plattenkonstruktionen und ähnliches bereits beschrieben worden.

Im Hinblick auf den Betrieb in solchen Heizeinrichtungen ist ebenfalls als bekannt anzusehen, dass diese vor bzw. mit Motorstart oder ggf. kurz nach Motorstart zur Verbesserung des Kaltstartverhaltens für einen begrenzten Zeitraum aktiviert wurden, wobei insbesondere berücksichtigt wurde, dass ausreichend Energie seitens des Fahrzeuges bereitgestellt werden konnte. Darüber hinaus ist auch bekannt, solche Heizeinrichtungen in Kombination mit Partikelfiltern einzusetzen, um hier eine thermische Regeneration der eingefangenen Partikel zu ermöglichen. Zu diesem Zweck ist bekannt, die Heizeinrichtung dann zu aktivieren, wenn ein vorgegebener Betriebszeitraum verstrichen ist oder die Partikelbeladung im Filter eine vorgegebene Größe erreicht hat.

Die DE-A1-10127782 beschreibt beispielsweise ein Heizgerät für eine Brennkraftmaschine und ein Verfahren zum Steuern des Heizgeräts. Dort wird insbesondere auch erläutert, wie die Erzielung einer zuverlässigen und ausreichenden Wirkungsweise eines Heizgeräts für eine Brennkraftmaschine durch Sicherstellung eines ausreichenden Maßes an elektrischer Leistung erfolgen kann. Zu diesem Zweck wird vorgeschlagen, dass eine Heizvorrichtung zur Erwärmung zumindest eines Teils der Brennkraftmaschine und eine Elektroenergiespeichervorrichtung vorgesehen wird, die der Heizvorrichtung elektrische Energie zur Erwärmung der Heizvorrichtung zuführt. Hierbei wird eine Elektroleistungsbedarfsberechnungseinrichtung zur Berechnung eines Maßes an für die Heizvorrichtung erforderlicher elektrischer Leistung sowie eine Lademaßsteuereinrichtung vorgesehen, wobei letzter zur Steuerung eines Lademaßes der Elektroenergiespeichervorrichtung auf der Grundlage des durch die Elektroleistungsbedarfsberechnungseinrichtung berechneten Elektroleistungsbedarf dient. Somit wird erreicht, dass die Batterie zur Steuerung eines Fahrzeugs stets ein ausreichendes Maß an elektrischer Energie zur Wiederherstellung des Reinigungselements in der Abgasanlage zuführen kann.

Die DE-A1-4241494 beschreibt eine Heizstrategie zur Aufheizung eines katalytischen Konverters beim Kaltstart einer Verbrennungskraftmaschine. Ziel der Heizstrategie ist es, gesetzliche Schadstoffgrenzwerte für den Kaltstart einzuhalten.

Die DE-C2-4042562 betrifft eine Abgasreinigungsanlage mit einem Filter und einem Heizer. Der Heizer dient zur Erhöhung der Temperatur in der Abgasreinigungsanlage, um den Filter zu regenerieren bzw. Partikel in dem Filter abzubrennen.

Die bekannten Einsatzwecke und/oder Einsatzstrategien führten jedoch nur teilweise zu den gewünschten Ergebnissen. Insbesondere musste festgestellt werden, dass der Einsatz der Heizeinrichtung teilweise einen unerwünscht hohen Energiebedarf zur Folge hat und die Aktivierungszyklen teilweise sehr große Zeiträume einnahmen.

Hiervon ausgehend ist es Aufgabe der vorliegenden Erfindung, die mit Bezug auf den Stand der Technik geschilderten Probleme zumindest teilweise zu lösen. Insbesondere soll ein Verfahren angegeben werden, das energiesparend und effektiv für eine Vielzahl unterschiedlicher Einsatzzwecke den Einsatz solcher Heizeinrichtungen in Abgasanlagen mobiler Verbrennungskraftmaschinen ermöglicht.

Diese Aufgaben werden gelöst mit einem Verfahren gemäß den Merkmalen des Patentanspruchs 1. Weitere vorteilhafte Ausgestaltungen und Einsatzgebiete der Erfindung werden in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können, und weitere Ausgestaltungen der Erfindung aufzeigen. Die Erfindung wird nachfolgend gerade im Zusammenhang mit der Beschreibung und den Figuren weiter spezifiziert, so dass auch hier besonders bevorzugte Ausführungsvarianten angegeben sind.

Das erfindungsgemäße Verfahren zum Betreiben eines Kraftfahrzeuges, welches einen Antrieb und eine Abgasanlage mit wenigstens einer regelbaren und mit Abgas in Kontakt bringbaren Heizvorrichtung aufweist, umfasst zumindest die folgenden Schritte:
(a) Erfassen wenigstens eines Betriebsparameters (6) der Abgasanlage (3), wobei der Betriebsparameter eine Temperatur des Abgases oder eine Temperatur einer Abgasbehandlungskomponente ist,
(b) Bestimmen mindestens eines Einflusswertes (7) der Heizvorrichtung (4), wobei der Einflusswert (7) ein Temperaturerhöhungspotential durch eine Heizleistung bei anliegendem Abgasmassenstrom ist,
(c) Vergleichen des mindestens einen Einflusswertes (7) mit einem Zielparameter (8) der Abgasanlage (3), wobei der Zielparameter (8) ein vorgegebener Wert des Betriebsparameters (6) der Abgasanlage (3) ist,
(d) Aktivieren der Heizvorrichtung (4), so dass der Betriebsparameter (6) den Zielparameter (8) erreicht,
   - wobei nur dann eine Aktivierung der Heizvorrichtung (4) erfolgt, wenn der Betriebsparameter (6) den Zielparameter (8) erreichen kann,
   - und eine externe Aktivierungsanfrage der Heizvorrichtung (4) verweigert wird, wenn Schritt (b) ergibt, dass der mindestens eine Einflusswert (7) nicht ausreicht, damit der Betriebsparameter (6) den Zielparameter (8) erreicht,
wobei das Verfahren mit der Aktivierung des Antriebs (2) gestartet, kontinuierlich durchgeführt und mit der Deaktivierung des Antriebs (2) beendet wird.

Damit betrifft das erfindungsgemäße Verfahren die Regelung einer mit dem Abgas eines Kraftfahrzeugmotors in Kontakt stehenden Heizvorrichtung, so dass ein gewünschter Zielparameter der Abgasanlage bzw. eine Komponente darin sicher erreicht wird.

Bei dem "Antrieb" kann es sich neben bekannten Diesel- oder Benzinmotoren auch um jeden anderen, vergleichbaren, Antrieb handeln, der letztendlich ein mit Schadstoff belastetes Abgas erzeugt bzw. ein Abgas, das einer Temperaturbehandlung unterzogen werden soll. Die "Abgasanlage" ist regelmäßig mit einem Strang (oder mehreren Strängen) gebildet, insbesondere nach Art einer rohrförmigen Leitung. In dieser, das Abgas in einer bevorzugten Strömungsrichtung führenden, Abgasanlage ist nun mindestens eine Heizvorrichtung vorgesehen, die insbesondere den inneren Querschnitt der Abgasanlage zumindest teilweise überspannt. Dabei bildet die Heizvorrichtung Durchlässe, Kanäle oder dergleichen, durch die das Abgas hindurch strömt. Die Heizvorrichtung kann zusätzlich zu ihrer Heizfunktion weitere Funktionen aufweisen, beispielsweise eine katalytische Umwandlung, Speicherung, oder Umlenkung von Abgasbestandteilen.

Gemäß Schritt (a) wird zunächst zu einem vorgebbaren Zeitpunkt (während des Fahrbetriebes des Kraftfahrzeuges) wenigstens ein Betriebsparameter der Abgasanlage erfasst. Das Erfassen des Betriebsparameters kann mittels wenigstens eines Messfühlers, verschiedenen Sensoren und/oder einem Rechenmodell erfolgen. Als Betriebsparameter kommen die Temperaturen des Abgases an einer bzw. mehreren Positionen der Abgasanlage, die Temperatur einer Abgasbehandlungskomponente im Inneren der Abgasanlage, und Ähnliches in Betracht. Der für den betrachteten Betriebsparameter signifikante Mess- oder Rechenwert wird dabei bevorzugt registriert oder sogar gespeichert.

In Schritt (b), der grundsätzlich auch vor und/oder zeitgleich mit Schritt (a) stattfinden kann, wird wenigstens ein Einflusswert der Heizvorrichtung bestimmt. Zu diesem Zweck wird bevorzugt einerseits auf Kennwerte der Heizvorrichtung zurückgegriffen (z. B. thermische Masse, geometrische Oberfläche, Stromzufuhr, elektrischer Widerstand und Ähnliches), daneben wird aber auch der in Schritt (a) erfasste Betriebsparameter bzw. einer der erfassten Betriebsparameter berücksichtigt. Dabei wird von der Erkenntnis Gebrauch gemacht, dass der Einflusswert der Heizvorrichtung von wenigstens einem Betriebsparameter der Abgasanlage abhängig ist. Das heißt mit anderen Worten beispielsweise, dass bei einem vorgegebenen Abgasmassenstrom die Heizvorrichtung nur in einem bestimmten Umfang eine Temperaturerhöhung bewirken kann. Dieses Temperaturerhöhungspotential wird als ein Einflusswert angesehen.

In Schritt (c), der bevorzugt nachfolgend den Schritten (a) und (b) durchgeführt wird, wird der mindestens eine Einflusswert der Heizvorrichtung mit einem Zielparameter der Abgasanlage verglichen. Der Zielparameter ist beispielsweise einem vorgesehen Datenspeicher entnommen und/oder wurde (ggf. aktuell) errechnet. Ein solcher Zielparameter der Abgasanlage ist ein vorgegebener Wert eines oder mehrer Betriebsparameter der Abgasanlage. Grundsätzlich ist es so, dass das erfindungsgemäße Verfahren bereits dann abgebrochen werden kann, wenn der erfasste Betriebsparameter aus Schritt (a) bereits in einer bevorzugten Relation zum Zielparameter liegt, zusätzliche Maßnahmen also nicht getroffen werden müssen. Eine solche Abfrage kann vor und/oder während bzw. nach Schritt (a) vorgesehen sein. Wird jedoch festgestellt, dass der erfasste Betriebsparameter nicht in einer bevorzugten Relation zum Zielparameter liegt, wird anhand des Vergleiches bestimmt, in wieweit der Einflusswert mit ausreichender Wahrscheinlichkeit gewährleistet, dass bei Aktivierung der Heizvorrichtung der aktuelle Betriebsparameter in gewünschter Relation zum Zielparameter der Abgasanlage gebracht werden kann.

In Schritt (d) wird nun vorgeschlagen, dass nur dann eine Aktivierung der Heizvorrichtung erfolgen soll, wenn der Betriebsparameter den Zielparameter erreicht. Liegt die erfasste Betriebstemperatur der Abgasanlage beispielsweise so tief, dass selbst bei Einschalten der Heizvorrichtung nur eine solche Temperaturerhöhung bewirkt wird, das die gewünschte Zieltemperatur nicht erreicht wird, wird die Heizvorrichtung nicht aktiviert. Zu diesem Zeitpunkt kann zusätzlich entschieden werden, ob das erfindungsgemäße Verfahren direkt wiederholt wird, bis sich eine Aktivierung der Heizvorrichtung anbietet, es ist jedoch auch möglich, andere Maßnahmen zunächst zu verwirklichen, um schließlich den Einsatz der Heizvorrichtung energetisch günstig zu starten.

Damit kann insbesondere eine permanente Überprüfung der Einsatzmöglichkeit einer Heizvorrichtung realisiert werden. Hierbei wird ein Abbruchkriterium definiert für Situationen, in denen die Aktivierung der Heizvorrichtung nicht sinnvoll ist, bevor nicht andere (zusätzliche, ggf. gleichzeitig oder zeitlich vorangestellte) Maßnahmen den gewünschten Effekt der Heizvorrichtung begünstigen. Auf diese Weise ist ein besonders sparsamer, energetisch effektiver Einsatz der Heizvorrichtung während des Betriebes des Kraftfahrzeuges sicher gestellt.

Das Verfahren wird mit der Aktivierung gestartet, kontinuierlich durchgeführt und mit der Deaktivierung des Antriebs beendet. Das heißt mit anderen Worten insbesondere, dass das Verfahren, ggf. in fest vorgegebenen und/oder dynamischen Zyklen, einen Vergleich des wenigstens einem Betriebsparameters der Abgasanlage mit dem Einflusswert der Heizvorrichtung durchführt und bedarfsweise eine Aktivierung der Heizvorrichtung erfolgt.

Darüber hinaus betrifft Schritt (a) als Betriebsparameter wenigstens eine Abgastemperatur. Darüber hinaus kommen insbesondere noch folgende Parameter des Abgases in Betracht: Abgaszusammensetzung, Konzentrationsgehalt eines vorgegebenen Anteils des Abgases, etc.

Dieser Betriebsparameter kann mittels (wenigstens) eines Messfühlers, einer Sonde oder einer ähnlichen Apparatur aktuell erfasst werden, es ist jedoch auch möglich, den Betriebsparameter beispielsweise aus den Betriebsdaten des Antriebes und weiteren Kenngrößen zu errechnen.

Bezüglich Schritt (b) wird als Einflusswert die Heizleistung der Heizvorrichtung betrachtet. Die Heizleistung betrifft insbesondere den Wert, den die Heizvorrichtung als Temperaturerhöhung bei anliegendem Abgasmassenstrom ermöglicht. Folglich könnte eine Heizleistung (H) z.B. als Differenz der gemittelten Temperatur des Abgases nach Kontakt mit einer aktiven Heizvorrichtung (T_{II}) zu der gemittelten Temperatur des Abgases vor dem Kontakt mit der Heizvorrichtung (T_{I}) angegeben werden: H = T_{II} - T_{I}. Bei wabenförmig ausgebildeten Heizvorrichtungen, insbesondere mit zumindest teilweise strukturierten Blechfolien und einer Spannungsquelle von 12 - 14 Volt, lassen sich folgende Heizleistungen als (insbesondere untere) Einflusswerte bevorzugt angeben:
H (Abgasmassenstrom: 0,017 kg/s): 46 - 52 Kelvin;
H (Abgasmassenstrom: 0,023 kg/s): 40 - 44 Kelvin;
H (Abgasmassenstrom: 0,027 kg/s): 31 - 35 Kelvin;
H (Abgasmassenstrom: 0,030 kg/s): 24 - 28 Kelvin;
H (Abgasmassenstrom: 0,035 kg/s): 22 - 24 Kelvin;
H (Abgasmassenstrom: 0,040 kg/s): 18 - 22 Kelvin.

Die vorstehenden Angaben betreffen insbesondere eine Heizvorrichtung, die eine Blechfolienanordnung mit einer Vielzahl von Kanälen (300 bis 600 cpsi) umfasst, welche die angegebene Heizleistung über 10 bis 15 mm Heizstrecke (Kanallänge in Strömungsrichtung des Abgases) verwirklicht. Die Schwankungsbreiten ergeben sich beispielsweise durch die während des Betriebes erwärmte Blechfolienanordnung (Wärmekapazität), die Mittelung der dynamischen Temperaturverläufe und dergleichen.

Außerdem betrifft der Zielparameter der Abgasanlage in Schritt (c) wenigstens eine Abgastemperature. Darüber hinaus betroffen sein kann: Reaktionsvermögen von im Abgas enthaltenen Partikeln, katalytische Reaktionswahrscheinlichkeit, Umwandlungsvermögen eines Aggregatzustandes des Abgases oder eines Zusatzstoffes, etc. Bezüglich des Reaktionsvermögens bei den im Abgas enthaltenen Partikeln sei angemerkt, dass mit der Heizvorrichtung beispielsweise eine Umgebungsbedingung geschaffen werden kann, bei der eine Konvertierung bzw. Umsetzung von Partikeln in gasförmige Bestandteile erreicht wird. Eine Erhöhung der katalytischen Reaktionswahrscheinlichkeit kann erreicht werden, indem beispielsweise auf der Heizvorrichtung und/oder in Strömungsrichtung nachgelagerten Abgasbehandlungskomponenten Umgebungsbedingungen geschaffen werden, bei der eine katalytisch aktivierte, chemische Reaktion von Abgasbestandteilen initiiert wird. Darüber hinaus kann auch ein Umwandlungsvermögen eines Aggregatzustandes des Abgases und eines Zusatzstoffes (Reduktionsmittel, Wasser, etc.) Gegenstand des Zielparameters sein.

Darüber hinaus wird ein Verfahren als vorteilhaft erachtet, wobei Schritt (d) in Abhängigkeit vom Zielparameter über einen vorgegebenen Aktivierungszeitraum durchgeführt und anschließend die Heizvorrichtung deaktiviert wird. Ganz besonders bevorzugt ist, dass der Aktivierungszeitraum von der Art des Zielparameters variabel ist. So können beispielsweise Temperaturerhöhungen des Abgases über einen kürzeren Aktivierungszeitraum realisiert werden, als eine Umwandlung von Partikeln. Versuche haben gezeigt, dass für folgende Parameter und folgenden Randbedingungen die nachfolgend aufgeführten Aktivierungszeiträume bei den ebenfalls beschriebenen Heizvorrichtungen vorteilhaft sind:
1. Bei einem der Heizvorrichtung nachgeschalteten Katalysator, der eine katalytische Beschichtung zur oxidativen Umsetzung von Kohlenmonoxid aufweist, sollte eine gemittelte Temperatur des Abgases nach Kontakt mit einer aktiven Heizvorrichtung (T_{II}) vorliegen, die eine Abgastemperatur von 150°C bei Eintritt in den Katalysator gewährleistet.
2. Bei einem der Heizvorrichtung nachgeschalteten Katalysator, der eine katalytische Beschichtung zur oxidativen Umsetzung von Kohlenwasserstoffen aufweist, sollte eine gemittelte Temperatur des Abgases nach Kontakt mit einer aktiven Heizvorrichtung (T_{II}) vorliegen, die eine Abgastemperatur von 170°C bei Eintritt in den Katalysator gewährleistet.
3. Bei einem der Heizvorrichtung nachgeschalteten Katalysator, der eine katalytische Beschichtung zur selektiven Umsetzung von Stickoxiden aufweist, sollte eine gemittelte Temperatur des Abgases nach Kontakt mit einer aktiven Heizvorrichtung (T_{II}) vorliegen, die (a) eine Abgastemperatur von 200°C bei Eintritt in den Katalysator mit einer Vanadium umfassenden Beschichtung, (b) eine Abgastemperatur von 250°C bis 600°C bei Eintritt in den Katalysator mit einer Eisen-Zeolith (Fe-CSM-System) umfassenden Beschichtung (ggf. in Abhängigkeit von der NOx-Zusammensetzung des Abgasstromes variierend) gewährleistet.

Die Deaktivierung des Heizelements kann insbesondere dann vorgenommen werden, wenn eine Aktivierung des nachgelagerten Katalysators bzw. Partikelfilters (z. B. mit einer Temperaturdifferenzüberwachung über den Katalysator bzw. Partikelfilter) festgestellt wurde. Dann kann das hier vorgeschlagene Verfahren wieder mit der Überwachung beginnen.

Um eine besonders hohe Effektivität des Verfahrens zu gewährleisten wird auch vorgeschlagen, dass Schritt (d) mittels wenigstens eines elektrisch beheizbaren Wabenkörpers durchgeführt wird. Mit einem solchen Wabenkörper können relativ kleine Kanäle verwirklicht werden, durch die das Abgas hindurch geleitet wird. Gleichzeitig stellt der Wabenkörper folglich eine große Kontaktfläche mit dem Abgas dar, so dass hier ein intensiver Kontakt zwischen Wärmequelle und dem Abgas realisiert werden kann. Folglich kann bei einer kompakten Anordnung des Wabenkörpers durch kurze Aktivierungszyklen der gewünschte Zielparameter bei einer Mehrzahl von erfassten Betriebszuständen effektiv eingesetzt werden. Für den Aufbau eines solchen elektrisch beheizbaren Wabenkörpers wird auf die Patentveröffentlichungen der Anmelderin hingewiesen, insbesondere auf den Inhalt der WO-A-96/10127, die hier zur Erläuterung des Aufbaus und der Funktion solcher elektrisch beheizbaren Wabenkörper stets herangezogen werden kann.

Außerdem wird eine externe Aktivierungsanfrage der Heizvorrichtung verweigert, wenn Schritt (b) ergibt, dass der mindestens eine Einflusswert der Heizvorrichtung nicht ausreicht, um die Bedingung aus Schritt (d) zu erfüllen. Damit ist insbesondere gemeint, dass die Aktivierung der Heizvorrichtung beispielsweise durch andere Komponenten des Kraftfahrzeuges gefordert werden könnte, beispielsweise können Sonden feststellen, dass der Druckabfall über einer Partikelfalle zu groß ist und deshalb eine Regeneration notwendig wäre. Gleichfalls könnte beispielsweise auch die Überwachung des Lastbetriebpunktes des Antriebes signalisieren, dass die Temperatur des Abgases nun zu tief ist. Das Motormanagement könnte nun die Heizvorrichtung aktivieren wollen. Es wurde jedoch heraus gefunden, dass gerade in solchen Zuständen nur zusätzliche Energie für die Heizvorrichtung benötigt und verbraucht wird, ohne letztendlich mit Sicherheit das gewünschte Ziel zu erreichen. Deshalb wird ergänzend vorgeschlagen, dass diese externe Aktivierung nur erfolgt, wenn die Bedingung aus Schritt (d) erfüllbar ist.

Darüber hinaus sei auch angemerkt, dass bevorzugt zumindest eine der folgenden Größen berechnet wird: Betriebsparameter der Abgasanlage, Einflusswert der Heizvorrichtung, Zielparameter der Abgasanlage. Die Berechnung dieser Größe(n) kann auf Basis einer oder mehrerer der hier genannten anderen Größen erfolgen. Bevorzugt ist, dass zumindest eine der Größen (auch) messtechnisch erfasst wird, insbesondere unter Einsatz wenigstens eines Messfühlers.

Besonders vorteilhaft findet die Erfindung Einsatz in einem Kraftfahrzeug umfassend einen Antrieb und eine Abgasanlage mit wenigstens einer regelbaren und mit Abgas in Kontakt bringbaren Heizvorrichtung, bei dem zumindest die Heizvorrichtung mit einer Kontrolleinheit verbunden ist, die zur Durchführung des hier erfindungsgemäß beschriebenen Verfahrens eingerichtet ist.

Die Erfindung sowie das technische Umfeld werden anhand der Figuren näher erläutert. Es ist darauf hinzuweisen, dass die Figuren besonders bevorzugte Ausführungsvarianten der Erfindung zeigen, diese jedoch nicht darauf beschränkt ist. Es zeigen schematisch:
- Fig. 1:: ein Diagramm mit einer Veranschaulichung einer möglichen Wirkungsweise des erfindungsgemäßen Verfahrens, und
- Fig. 2:: einen möglichen Aufbau einer Abgasanlage zum Betrieb eines Kraftfahrzeuges gemäß dem hier erläuterten Verfahren.

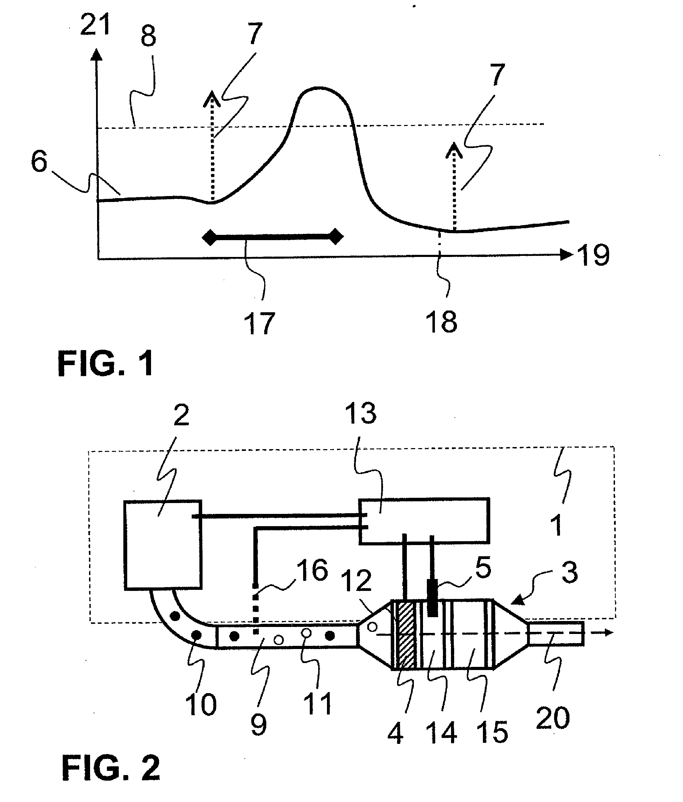

In Fig. 1 ist ein Diagramm dargestellt, wobei ein Betriebsparameter der Abgasanlage 6 (hier die Temperatur 21) über den Verlauf der Zeit 19 aufgetragen ist. Von links ausgehend ist zu erkennen, dass der Betriebsparameter 6 im Wesentlichen einen konkreten Wert hält. Zu diesem Zeitpunkt könnte beispielsweise Schritt (a) durchgeführt und der aktuelle Betriebsparameter 6 erfasst werden. Im Anschluss daran wird nun der Einflusswert 7 der Heizvorrichtung bestimmt (gemäß Schritt (b)). Der Einflusswert 7 ist hier gestrichelt dargestellt, wobei bei einem Vergleich des Einflusswertes 7 mit dem hier gestrichelt dargestelltem Zielparameter 8 erkannt wird, dass der Einfluss so groß ist, dass der Zielparameter 8 sicher erreicht werden kann. Aus diesem Grund wird nun die Heizvorrichtung über einen Aktivierungszeitraum 17 aktiviert. In dem hier dargestellten Fall reicht dieser Aktivierungszeitraum 17 aus, den Betriebsparameter 6 über den Zielparameter 8 anzuheben, so dass der gewünschte Erfolg sicher gewährleistet ist.

Weiter rechts im Diagramm, also zu einem (beliebig) späteren Zeitpunkt, ist beispielhaft eine andere Situation dargestellt. Dabei wird beispielsweise erkannt, dass nun mehr in einem Teilsystem der Abgasanlage eine Temperaturerhöhung auf den Zielparameter erforderlich ist. Das Motormanagement würde nun eine Aktivierungsanfrage 18 zu dem dargestellten Zeitpunkt starten. Nun wird zu Zeit der Aktivierungsanfrage 18 erneut das erfindungsgemäße Verfahren durchgeführt, wobei beim Vergleich des Einflusswertes 7 mit dem Zielparameter 8 erkannt wird, dass der Zielparameter 8 mit einer Aktivierung der Heizvorrichtung nicht erreicht werden kann. Deshalb wird die Heizvorrichtung hier nicht aktiviert, sondern es wird vorab auf andere Maßnahmen (Einfluss auf die Verbrennungsprozesse im Antrieb, Einsatz von Zusatzstoffen, etc.) zurückgegriffen.

In der Fig. 2 wird nun schematisch der Aufbau eines Kraftfahrzeuges 1 mit einem Antrieb 2 und einer Abgasanlage 3 dargestellt. Das im Antrieb 2 generierte Abgas 9 strömt in Strömungsrichtung 20 durch die Abgasanlage 3, wobei es eine Mehrzahl von Abgasreinigungskomponenten durchströmt. Das Abgas 9 kann beispielsweise Partikel 10 umfassen. Zusätzlich ist möglich, dass eine Zufuhr 16 für einen Zusatzstoff 11 (Luft, Wasser, Reduktionsmittel, Kraftstoff,... etc.) vorgesehen ist. Das Abgas 9 trifft nun auf eine Heizvorrichtung 4, die hier nach Art eines elektrisch beheizbaren Wabenkörpers 12 ausgeführt sein soll. In Strömungsrichtung 20 und der regelbaren Heizvorrichtung 4 nachfolgend ist ein katalytischer Konverter 14 und ein Speicher 15 (z.B. Absorber, Partikelfalle oder Ähnliches) vorgesehen. Beispielhaft für viele andere mögliche Positionen in der Abgasanlage 3 ist hier der Konverter 14 mit einem internen Messfühler 5 versehen.

Zur Durchführung des hier beschriebenen Verfahrens ist die Heizvorrichtung 4 zudem mit einer Kontrolleinheit 13 verbunden, die beispielsweise mit dem Motormanagement bzw. dem Antrieb 2 und/oder dem Messfühler 5 und/oder der Zufuhr 16 für den Zusatzstoff 11 verbunden ist. Zur Durchführung des erfindungsgemäßen Verfahrens kann die Kontrolleinheit 13 mit einer entsprechenden Software sowie Datenverarbeitungsmitteln versehen sein.

### Bezugszeichenliste

- 1: Kraftfahrzeuges
- 2: Antrieb
- 3: Abgasanlage
- 4: Heizvorrichtung
- 5: Messfühler
- 6: Betriebsparameter der Abgasanlage
- 7: Einflusswert der Heizvorrichtung
- 8: Zielparameter der Abgasanlage
- 9: Abgas
- 10: Partikel
- 11: Zusatzstoff
- 12: elektrisch beheizbarer Wabenkörper
- 13: Kontrolleinheit
- 14: Konverter
- 15: Speicher
- 16: Zufuhr
- 17: Aktivierungszeitraum
- 18: Aktivierungsanfrage
- 19: Zeit
- 20: Strömungsrichtung
- 21: Temperatur

## Patentansprüche

1. Verfahren zum Betrieb eines Kraftfahrzeuges (1), das einen Antrieb (2) und eine Abgasanlage (3) mit wenigstens einer regelbaren und mit Abgas in Kontakt bringbaren Heizvorrichtung (4) aufweist, umfassend zumindest die folgenden Schritte:
(a) Erfassen wenigstens eines Betriebsparameters (6) der Abgasanlage (3), wobei der Betriebsparameter eine Temperatur des Abgases oder eine Temperatur einer Abgasbehandlungskomponente ist.
(b) Bestimmen mindestens eines Einflusswertes (7) der Heizvorrichtung (4), wobei der Einflusswert (7) ein Temperaturerhöhungspotential durch eine Heizleistung bei anliegendem Abgasmassenstrom ist,
(c) Vergleichen des mindestens einen Einflusswertes (7) mit einem Zielparameter (8) der Abgasanlage (3), wobei der Zielparameter (8) ein vorgegebener Wert des Betriebsparameters (6) der Abgasanlage (3) ist,
(d) Aktivieren der Heizvorrichtung (4), so dass der Betriebsparameter (6) den Zielparameter (8) erreicht,
- wobei nur dann eine Aktivierung der Heizvorrichtung (4) erfolgt, wenn der Betriebsparameter (6) den Zielparameter (8) erreichen kann,
- und eine externe Aktivierungsanfrage der Heizvorrichtung (4) verweigert wird, wenn Schritt (b) ergibt, dass der mindestens eine Einflusswert (7) nicht ausreicht, damit der Betriebsparameter (6) den Zielpararneter (8) erreicht,
wobei das Verfahren mit der Aktivierung des Antriebs (2) gestartet, kontinuierlich durchgeführt und mit der Deaktivierung des Antriebs (2) beendet wird.

2. Verfahren nach Anspruch 1, wobei der Zielparameter (8) der Abgasanlage (3) in Schritt (c) wenigstens einen der folgenden Parameter betrifft: Abgastemperatur, Reduktionsvermögen von im Abgas (9) enthaltenen Partikeln (10), katalytische Reaktionswahrscheinlichkeit, Umwandlungsvermögen eines Aggregatzustandes des Abgases (9) oder eines Zusatzstoffes (11).

3. Verfahren nach einem der vorhergehenden Patentansprüche, wobei Schritt (d) in Abhängigkeit vom Zielparameter (8) über einen vorgegebenen Aktivierungszeitraum (17) durchgeführt und anschließend die Heizvorrichtung (4) deaktiviert wird.

4. Verfahren nach einem der vorhergehenden Patentansprüche, wobei Schritt (d) mittels wenigstens eines elektrisch beheizbaren Wabenkörpers (12) durchgeführt wird.

5. Verfahren nach einem der vorhergehenden Patentansprüche, wobei zumindest eine der folgenden Größen berechnet wird: Betriebsparameter (6) der Abgasanlage (3), Einflusswert (7) der Heizvorrichtung (4), Zielparameter (8) der Abgasanlage (3).

6. Kraftfahrzeug (1), umfassend einen Antrieb (2) und eine Abgasanlage (3) mit wenigstens einer regelbaren und mit Abgas (10) in Kontakt bringbaren Heizvorrichtung (4), bei dem zumindest die Heizvorrichtung (4) mit einer Kontrolleinheit (13) verbunden ist, die zur Durchführung eines Verfahrens gemäß einem der vorhergehenden Patentansprüche eingerichtet ist.

## Claims

1. Method for operating a motor vehicle (1) which has a drive (2) and an exhaust system (3) with at least one controllable heating device (4) which can be placed in contact with exhaust gas, comprising at least the following steps:
(a) detecting at least one operating parameter (6) of the exhaust system (3), wherein the operating parameter is a temperature of the exhaust gas or a temperature of an exhaust-gas treatment component,
(b) determining at least one influential variable (7) of the heating device (4), wherein the influential variable (7) is a temperature increase potential of a heating power for the given exhaust-gas mass flow,
(c) comparing the at least one influential variable (7) with a target parameter (8) of the exhaust system (3), wherein the target parameter (8) is a predefined value of the operating parameter (6) of the exhaust system (3),
(d) activating the heating device (4) such that the operating parameter (6) reaches the target parameter (8),
- whereby the heating device (4) is only activated when the operating parameter (6) is able to reach the target parameter (8),
- and with an external activation request of the heating device (4) being denied if step (b) yields that the at least one influential variable (7) is not sufficient thus the operating parameter (6) reaches the target parameter (8), wherein the method being started with the activation of the drive (2), carried out continuously and ended with the deactivation of the drive (2).

2. Method according to claim 1, with the target parameter (8) of the exhaust system (3) in step (c) relating to at least one of the following parameters: exhaust-gas temperature, capacity for the reduction of particles (10) contained in the exhaust gas (9), probability of catalytic reaction, capacity for the conversion of a state of aggregation of the exhaust gas (9) or of an additive (11).

3. Method according to one of the preceding claims, with step (d) being carried out as a function of the target parameter (8) over a predefined activation time period (17) and with the heating device (4) subsequently being deactivated.

4. Method according to one of the preceding claims, with step (d) being carried out by means of at least one electrically heatable honeycomb body (12).

5. Method according to one of the preceding claims, with at least one of the following variables being calculated: operating parameter (6) of the exhaust system (3), influential variable (7) of the heating device (4), target parameter (8) of the exhaust system (3).

6. Motor vehicle (1) comprising a drive (2) and an exhaust system (3) with at least one controllable heating device (4) which can be placed in contact with exhaust gas (10), in which at least the heating device (4) is connected to a control unit (13) which is set up to carry out a method according to one of the preceding claims.

## Revendications

1. Procédé pour le fonctionnement d'un véhicule automobile (1) qui présente un entraînement (2) et une installation de gaz d'échappement (3) avec au moins un dispositif de chauffage (4) réglable pouvant être amené en contact avec le gaz d'échappement, comprenant au moins les étapes suivantes :
(a) détection d'au moins un paramètre de fonctionnement (6) de l'installation de gaz d'échappement (3), le paramètre de fonctionnement étant une température du gaz d'échappement ou une température d'un composant de traitement de gaz d'échappement,
(b) détermination d'au moins une valeur d'influence (7) du dispositif de chauffage (4), la valeur d'influence (7) étant un potentiel d'augmentation de température par une puissance de chauffage lors de l'application d'un courant volumique de gaz d'échappement,
(c) comparaison de l'au moins une valeur d'influence (7) avec un paramètre cible (8) de l'installation de gaz d'échappement (3), le paramètre cible (8) étant une valeur prédéfinie du paramètre de fonctionnement (6) de l'installation de gaz d'échappement (3),
(d) activation du dispositif de chauffage (4) de telle sorte que le paramètre de fonctionnement (6) atteigne le paramètre cible (8),
- une activation du dispositif de chauffage (4) se produisant alors seulement lorsque le paramètre de fonctionnement (6) peut atteindre le paramètre cible (8),
- et une demande d'activation externe du dispositif de chauffage (4) étant refusée si l'étape (b) indique que l'au moins une valeur d'influence (7) ne suffit pas pour que le paramètre de fonctionnement (6) atteigne le paramètre cible (8),
le procédé commençant avec l'activation de l'entraînement (2), et étant mis en oeuvre en continu et se terminant avec la désactivation de l'entraînement (2).

2. Procédé selon la revendication 1, dans lequel le paramètre cible (8) de l'installation de gaz d'échappement (3) à l'étape (c) concerne au moins l'un des paramètres suivants : température du gaz d'échappement, capacité de réduction des particules (10) contenues dans le gaz d'échappement (9), probabilité de réaction catalytique, capacité de conversion d'un état physique du gaz d'échappement (9) ou d'un additif (11) .

3. Procédé selon l'une quelconque des revendications précédentes, dans lequel l'étape (d) est mise en oeuvre en fonction du paramètre cible (8) pendant une période d'activation prédéfinie (17) et ensuite le dispositif de chauffage (4) est désactivé.

4. Procédé selon l'une quelconque des revendications précédentes, dans lequel l'étape (d) est mise en oeuvre au moyen d'au moins un corps en nid d'abeilles (12) pouvant être chauffé électriquement.

5. Procédé selon l'une quelconque des revendications précédentes, dans lequel au moins l'une des grandeurs suivantes est calculée : paramètre de fonctionnement (6) de l'installation de gaz d'échappement (3), valeur d'influence (7) du dispositif de chauffage (4), paramètre cible (8) de l'installation de gaz d'échappement (3).

6. Véhicule automobile (1), comprenant un entraînement (2) et une installation de gaz d'échappement (3) comprenant au moins un dispositif de chauffage (4) réglable pouvant être amené en contact avec le gaz d'échappement (10), dans lequel au moins le dispositif de chauffage (4) est connecté à une unité de contrôle (13) qui est prévue pour mettre en oeuvre un procédé selon l'une quelconque des revendications précédentes.
